# EUROPEAN PATENT SPECIFICATION

(11) **EP 3 015 835 B1**
(45) Date of publication and mention of the grant of the patent: **12.09.2018**
(21) Application number: 15191733.3
(22) Date of filing: 27.10.2015
(51) Int. Cl.: G01K 7/42, H01M 10/48

(54) **A METHOD AND A SYSTEM FOR DETERMINING THE OPERATING TEMPERATURE OF A CELL OF AN ELECTRIC CHARGE ACCUMULATOR ASSEMBLY WITHOUT PHYSICAL TEMPERATURE SENSORS, PARTICULARLY FOR ELECTRIC OR HYBRID MOTOR VEHICLES**
VERFAHREN UND SYSTEM ZUR BESTIMMUNG DER BETRIEBSTEMPERATUR EINER ZELLE EINER STROMLADUNGSAKKUMULATORANORDNUNG OHNE PHYSIKALISCHE TEMPERATURSENSOREN, INSBESONDERE FÜR ELEKTRISCHE ODER HYBRIDE KRAFTFAHRZEUGE
PROCÉDÉ ET SYSTÈME PERMETTANT DE DÉTERMINER LA TEMPÉRATURE DE FONCTIONNEMENT D'UNE CELLULE D'UN ENSEMBLE ACCUMULATEUR DE CHARGE ÉLECTRIQUE SANS CAPTEURS DE TEMPÉRATURE PHYSIQUE, EN PARTICULIER POUR VÉHICULES À MOTEUR ÉLECTRIQUE OU HYBRIDE

(30) Priority: 27.10.2014 IT TO20140874
(43) Date of publication of application: 04.05.2016
(73) Proprietor: Magneti Marelli S.p.A., 20011 Corbetta (MI) (IT)
(72) Inventor: CATERINI, Canio, I-85010 CANCELLARA (Potenza) (IT); PRITELLI, Danilo, I-40100 BOLOGNA (IT); SUGLIA, Rosanna, I-40133 BOLOGNA (IT); AURILIO, Gianluca, I-81043 CAPUA (Caserta) (IT)
(74) Representative: Deambrogi, Edgardo

(56) References cited:
- US-A1- 2011 299 564
- US-A1- 2012 109 554
- US-A1- 2012 256 569

## Description

The present invention relates to electric charge accumulators, such as in particular the batteries for electric or hybrid vehicles, and specifically to determination of the operating temperature of the single cells in an electric charge accumulator assembly.

Even more specifically, the invention relates to a method and a system for determining the operating temperature of each single cell of an electric charge accumulator assembly.

In automotive applications, in particular for electrically driven or hybrid vehicles in which the electric energy stored in an accumulator assembly is also used for traction, in a continuous or discontinuous manner, it is necessary to have available accumulator systems with nominal voltages ranging from 48 V to 500 V and nominal capacities typically of between 500 Wh and several tens of kWh.

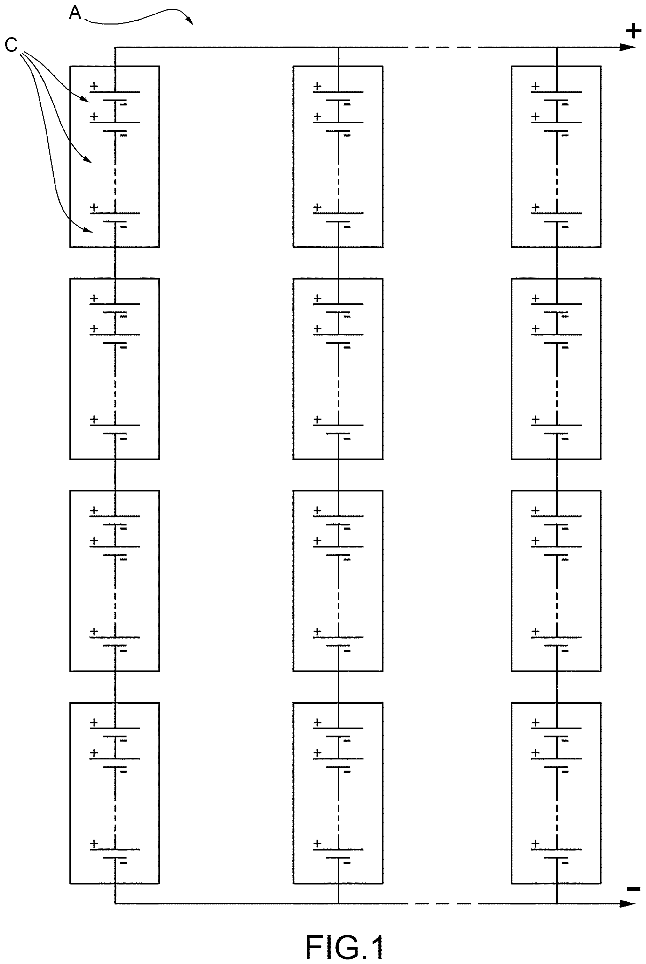

An electrical circuit diagram of on-board accumulator assembly, more commonly known as a battery pack, is shown in Figure 1. The accumulator - which is indicated by A - comprises a plurality of electrochemical cells C, typically lithium ion cells, which are similar to each other and interconnected in a series and parallel configuration designed to provide the desired voltage and capacitance.

In the configuration shown by way of example in Figure 1 the electrochemical cells C of the accumulator assembly A are arranged in a plurality of strings which are parallel to each other and each of which is formed by a plurality of cells connected in series and organized in a set of modules.

The accumulator assembly A is controlled by a battery management system comprising separate subsystems for managing the single modules of electrochemical cells, each of which includes:
- a circuit for acquiring the voltage across the single cells;
- a circuit for balancing the charge among the single cells;
- a plurality of temperature sensors adapted to measure the temperature of the cells in the module; and
- optionally a sensor for measuring the current supplied by the module, which may be common to several modules or to the entire accumulator assembly.

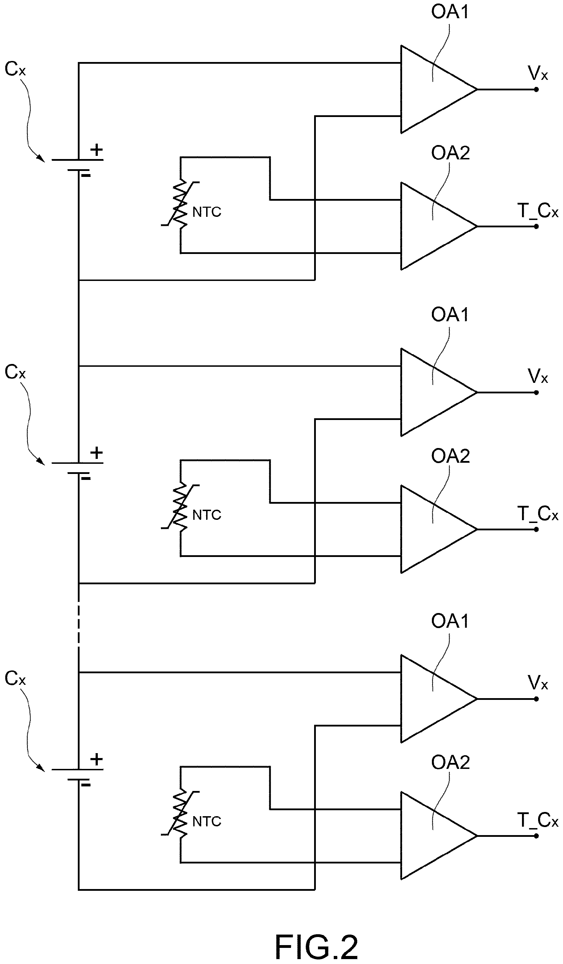

Figure 2 shows a subsystem for managing a module (BMC, Battery Management Controller) of similar cells C, which includes for each cell Cₓ a circuit OA1 for acquiring the voltage Vₓ across the cell and a circuit OA2 for acquiring the temperature T_Cₓ from a temperature sensor, for example a thermistor of the NTC type.

Knowledge of the temperature of each cell constitutes important information for correct management of said cell and the entire accumulator assembly. Knowledge of the temperature of the cells, together with knowledge of other characteristic electric parameters such as the voltage across the cells, is necessary for estimating the state of charge of the cells and for correct management and protection thereof in order to avoid triggering secondary chemical/physical processes which would result in a deterioration in their performance and their working life over time. In particular knowing the temperature and the value of the internal resistance, which can be deduced from the known voltage which establishes across the cells and the current supplied by each cell module, is useful for determining the State of Charge (SOC) and the State of Health (SOH) of the cell. The known temperature is then used in the operations for thermal management in general for protection of the cells and the accumulator assembly. In fact, a cell has an optimum performance if it is made to work at a predetermined operating temperature, determined by the current supplied and influenced by the cooling system associated with the accumulator assembly. By determining as precisely as possible the temperature of each cell it is possible to drive the cooling system associated with the accumulator assembly so as to maintain the desired operating temperature.

Theoretically, if the accumulator assembly is assembled correctly, the average cell temperature is the same for all the cells. However, a lack of uniformity between the temperatures of the cells may arise depending on the physical design of the single cells, the operating environment and the connection of the cell modules to the associated cooling system.

For this reason it is desirable to know the progression over time of the operating temperature of each single electrochemical cell of the accumulator assembly.

It is known in the art to acquire the temperature of the single cells by means of physical sensors singly associated with the cells or with sets of cells. The number of sensors normally present in the battery packs is therefore relatively high, this resulting in additional costs, the correct location not being able to be easily determined since the battery pack is a compact assembly which does have free spaces for housing such sensors, and the high number of sensors increases significantly the probability of electrical faults. Moreover, the cell temperature detected by means of physical sensors is the external temperature of the cell, but not the real temperature of the dielectric material inside the cell, the chemical/physical properties of which are subject to alterations depending on this temperature. In addition, the temperature information acquired by external sensors constitutes a temperature measurement which is delayed compared to the real temperature inside the cell, and more generally a lower average value of the real temperature.

US 2012/0256569 describes a control device for a vehicle battery, comprising a battery control circuit which includes a unit for diagnosis of the internal temperature of the battery connected to a unit for estimating the internal temperature of the battery and a unit for calculating the internal resistance of the battery. The diagnosis unit receives a value indicating the superficial temperature of the battery and - from the unit for estimating the internal temperature of the battery - the estimated value of the internal temperature of the battery. The diagnosis unit receives, moreover, from the unit for calculating the internal resistance of the battery, the value of the aforementioned internal resistance calculated as a function of the battery voltage and current. The estimated value of the internal temperature of the battery is obtained as an average of the estimated values of the internal temperatures of the battery cells, which are determined from the surface temperatures of the battery cells, the temperature of the environment surrounding the battery and the rate of the cooling fluid. US 2012/0109554 A1 describes another method for dynamically estimating the core temperature of a battery cell.

The object of the present invention is to provide a satisfactory solution to the problem of determining the temperature of the single cells of an accumulator assembly, avoiding the drawbacks of the prior art. In particular, the object of the invention is to provide a method for determining more precisely the temperature of a single cell of an accumulator assembly and - at the same time - to reduce drastically, to the point even of eliminating, the need to install physical sensors for sensing the temperature of the cells, therefore reducing the costs and the complexity of the battery management system and increasing its reliability. According to the present invention this object is achieved by means of a method for determining the operating temperature of a cell of an electric charge accumulator assembly having the characteristic features mentioned in Claim 1.

Particular embodiments form the subject of the dependent claims, the contents of which are to be understood as forming an integral or complementary part of the present description. The invention relates furthermore to a system for determining the operating temperature of a cell of an electric charge accumulator assembly as in claim 11.

In short, the present invention is based on the principle of determining dynamically the temperature of a cell of an electric charge accumulator assembly without using physical temperature sensors connected to the cell, or limiting significantly the number thereof compared to the total number of cells of the accumulator assembly, and estimating indirectly the internal temperature of the cell from the measurement of intrinsic electrical parameters of the cell, representing its internal resistance, and from knowledge of the ageing of the cell. Ageing of the cell may be estimated by means of variation of the electrical parameters, such as the resistance and the internal capacitance of a reference model of the cell, or by means of a heuristic algorithm based on time counters. By means of a preliminary identification process it is possible to provide a reference model representing the evolution over time of a relationship between the intrinsic electrical parameters of the cell and the internal temperature of the cell.

The known temperature of the cooling fluid represents an estimate of the cell temperature under static conditions of non-use of the accumulator assembly. Under dynamic conditions of use of the accumulator assembly the known temperature of the cooling fluid is lower than the real temperature of the single cells. However, knowledge of the average temperature of the cooling fluid may be used to provide a first estimate of the internal temperature of the cell. Advantageously, according to this approach, the accumulator assembly may not have physical temperature sensors connected to the cell.

Alternatively, in order to obtain a first estimate of the internal temperature of the cell, it is possible to use the known external temperature of at least one cell, detected by means of at least one physical temperature sensor connected to the cell or a set of cells. Preferably, the number of physical sensors is advantageously smaller than the number of cells.

Advantageously, with the system and the method according to the invention it is possible to obtain an increase in the reliability and a reduction of the costs depending on the physical temperature sensors associated with the single cells, the corresponding wiring and the necessary system for acquisition of the signals.

Even more advantageously, with the system and the method according to the invention it is possible to determine the temperature of the single cells more rapidly and with a comparable precision compared with known systems including physical temperature sensors associated with the single cells.

Further characteristic features and advantages of the invention will be described more fully in the detailed description below of an embodiment thereof, provided by way of a nonlimiting example, with reference to the attached drawings in which:
Figure 1 shows a schematic circuit diagram of a known accumulator assembly, or battery pack, comprising a plurality of electrochemical cells;
Figure 2 shows a schematic circuit diagram of a subsystem for managing a cell module of an accumulator assembly (BMC, Battery Management Controller);
Figure 3 shows a block diagram of a system for determining the temperature according to the invention;
Figure 4 is a flow diagram of the steps of a method for estimating the internal resistance carried out by the model for estimating the internal resistance of the temperature determination system according to the invention;
Figure 5 is a block diagram of a model for estimating the temperature of the temperature determination system according to the invention;
Figure 6 shows an exemple of a graph of internal resistance values of a cell as a function of the temperature of the cell for a certain value of the state of charge and ageing of the cell;
Figure 7 illustrates the procedure for validating the method and the system for determining the temperature of a cell forming the subject of the present invention; and
Figure 8 shows a comparison between the temperature of a cell acquired in bench-tests and the temperature of the same cell estimated by means of the method and the system according to the invention.

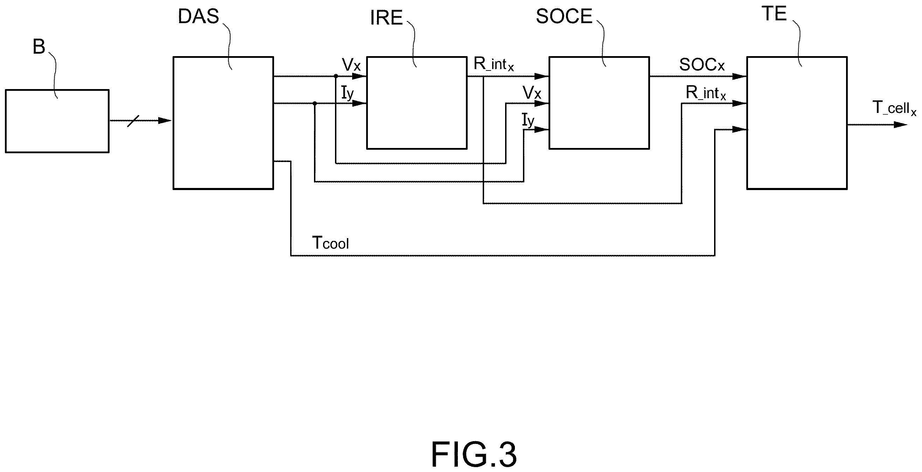

The method for determining the temperature of a cell of an accumulator assembly forming the subject of the invention is described with reference to the block diagram in Figure 3 which shows a temperature determination system according to the invention.

An accumulator assembly, such as a battery B of a vehicle, is provided with a system for acquiring physical parameters of the battery, indicated overall by DAS (Digital Acquisition System), said system including: a plurality of subsystems for managing the cell modules (BMC, Battery Management Controller), substantially similar to those shown in Fig. 2, but without the thermistors known in the art, as the sensors for sensing the external temperature of the cell; a plurality of current sensors, in a number equal to the number of parallel strings of cells; and at least one sensor for sensing the temperature of the battery cooling fluid, in the case where the battery cooling fluid is a liquid. Alternatively, in the case where it is not possible to detect the temperature of the cooling fluid or in the case where the temperature of the cooling fluid is not strictly related to the temperature of the cells because influenced by other factors in addition to the temperature of said cells (for example in the case where the battery is air cooled), at least one physical sensors (thermistor) for sensing the external temperature of at least one cell, singly connected to a cell or to a set of cells, is provided. Preferably, the number of physical sensors is advantageously smaller than the number of cells.

The acquisition system is designed to acquire, at each sampling instant, simultaneously the values of the voltage (Vₓ) of the single cells, the values of the current (I_{y}) of the strings of cells and the temperature (T_{cool}) of the cooling fluid, representative of the average temperature of the cells, acquired by a cooling fluid sensor.

In the alternative embodiment in which at least one physical sensor for sensing the external temperature of at least one cell is provided, this temperature represents the average temperature of the cells.

Downstream of the acquisition system DAS, a module for determining the internal resistance denoted overall by IRE (Internal Resistance Estimator) acquires synchronously at its input the values of Vₓ and I_{y} and calculates - in a known manner - the value of the internal resistances of the single cells, indicated by R_intₓ in the following of this description.

Downstream of the resistance estimator module IRE a module for estimating the state of charge, indicated overall by SOCE (State of Charge Estimator), knowing the values of the internal resistance R_intₓ of the single cells, the voltage values Vₓ across the single cells and the current values I_{y} of the strings of cells, calculates the state of charge values SOCₓ of the single cells by means of an Extended Kalman Filter (EKF).

Downstream of the module for estimating the state of charge SOCE, a module for estimating the temperature, indicated by TE (Temperature Estimator) is provided in order to determine the temperature of the single cells (T_cellₓ) by means of an estimation function, from the estimated values of the state of charge SOCₓ of each single cell, the internal resistance values R_intₓ calculated by the module IRE depending on the average temperature of the accumulator assembly, represented by the temperature T_{cool} of the cooling fluid or by the external temperature of at least one cell.

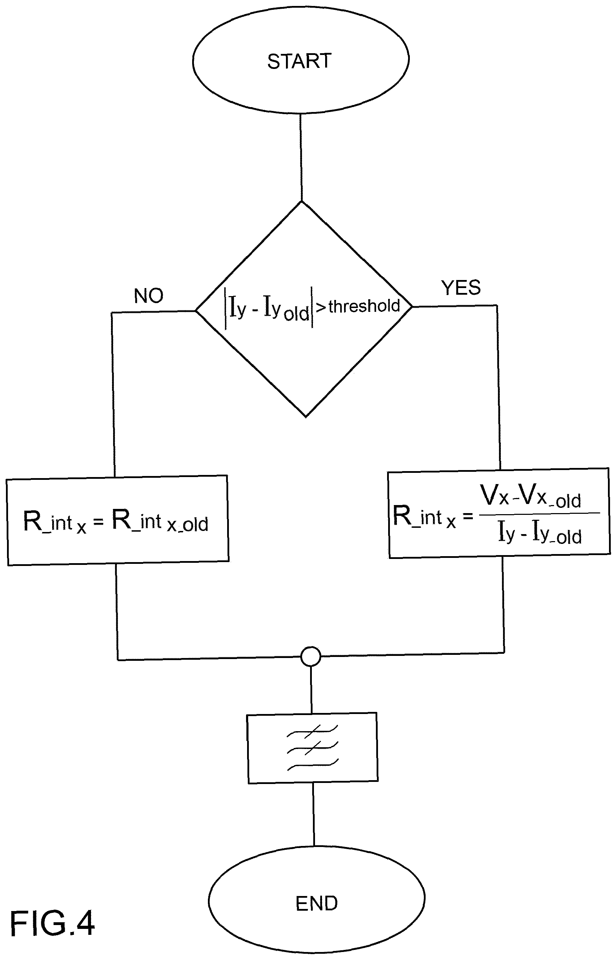

The method for determining the internal resistance performed by the module for determining the internal resistance, IRE, is described in greater detail with reference to Figure 4. It is designed to estimate the internal resistance of a single cell R_intₓ, as a function of the variation in current detected during a sampling period. If this variation - indicated in the figure by the difference between the present current I_{y} and the current detected at the previous sampling time I_{y_old} - is greater (in terms of absolute value) than a predetermined threshold, the internal resistance of the single cell is estimated as being the ratio between the voltage differential (Vₓ - V_{x_old}) and the current differential (I_{y} - I_{y_old}). If this variation is less than said predetermined threshold, the internal resistance of the single cell is estimated to be unchanged compared to the previously calculated value.

The resistance values thus obtained finally are filtered through a low-pass filter which has the function of limiting the pass-band of the signal, adapting it to the band of the current differential signal, in order to determine the resistance value R_intₓ input to the state of charge estimator module SOCE and to the temperature estimator module TE.

The module for estimating the state of charge SOCE is realized as an Extended Kalman Filter designed to estimate during the execution time the state of charge (SOC) of the single cells. The Extended Kalman Filter is based on a simplified circuit module consisting of a voltage generator, function of the state of charge SOCₓ, and of the temperature of the cell T_cellₓ, and a pair of anti-parallel resistors (R_charge, R_discharge), function of the state of charge, SOCₓ, of the temperature of the cell T_cellₓ and of the direction of the current. The sole state variable is the state of charge and the output variable is the voltage across the cell, which is a function of the state of charge through the no-load voltage and the current input to the cell through the resistance R estimated by the module IRE. The state equation of the Kalman filter calculates the present state of charge on the basis of the values of the state of charge and the current relating to the previous sampling period. The output equation of the Kalman filter calculates the voltage across the cell and the updating function estimates the state of charge, SOCₓ, updated on the basis of the error between the measured cell voltage and that estimated by the output equation.

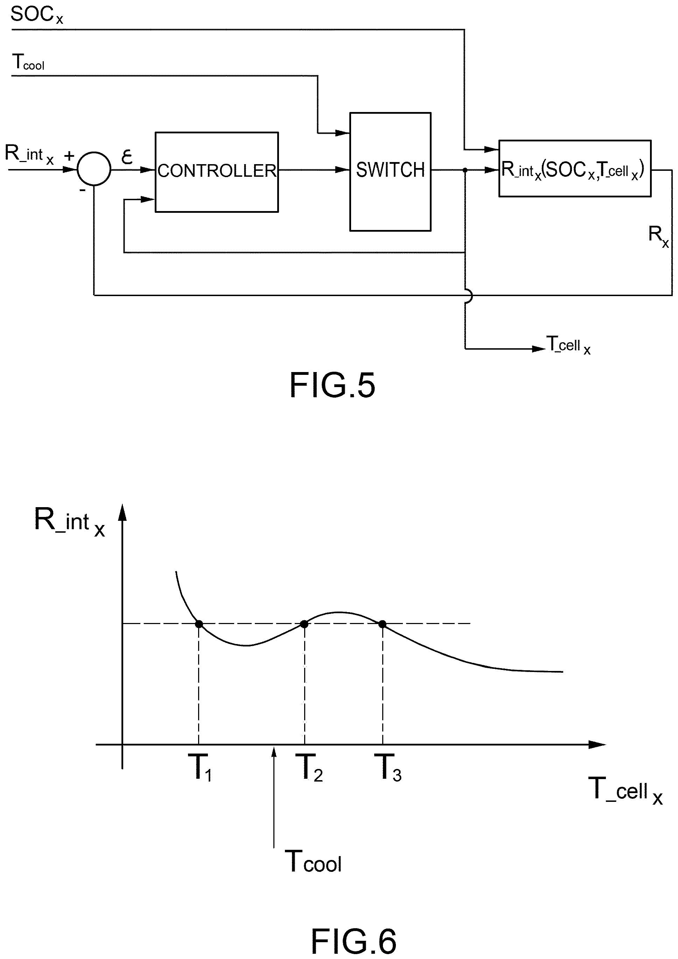

The module for estimating the temperature TE is described in greater detail with reference to Figure 5. It is designed to provide an estimate of the internal temperature of the cell T_cellₓ by means of a reference model, acquired during a preliminary step of characterization of the cell model, representing the evolution over time of a relationship between electrical resistance of the cell, R_intₓ, and the internal temperature of the cell, T_cellₓ, as a function of the state of charge, SOCₓ. This reference model is provided in the form of a table R_intₓ(SOCₓ, T_cellₓ) which is automatically adjusted on the basis of the estimated values of the state of charge SOCₓ of each single cell, of the values of the internal resistances R_intₓ and of the average temperature of the cells estimated by means of the temperature T_{cool} of the cooling fluid or by means of the external temperature of at least one cell.

Upon initialization of the temperature estimator module TE, namely at the start of an operating cycle of the battery, for example when a vehicle is started up, the temperature values of the single cells T_cellₓ are adjusted to the value of the average temperature of the battery pack estimated by means of the temperature T_{cool} of the cooling fluid or by means of the external temperature of at least one cell and, knowing a first pair of values (SOCₓ; T_cellₓ), an estimate of the value of the estimated internal resistance of the cell Rₓ is carried out

Subsequently, the value R_intₓ, calculated by the module IRE, and the estimate Rₓ obtained by the reference model, namely by the table R_intₓ(SOCₓ, T_cellₓ), are compared recursively, obtaining a correction in the estimate of the temperature of the cell T_cellₓ on the basis of the error of the internal resistance.

As shown in Figure 6, the function R_intₓ(SOCₓ, T_cellₓ) which associates internal resistance values R_intₓ with the temperature of the cell T_cellₓ for a certain value of the state of charge SOCₓ could at some points be non-linear and non-monotonic and therefore not reversible. This means that several temperature values could correspond to a same resistance value R_intₓ. For example, temperature values T₁, T₂ and T₃ correspond to the indicated value R_intₓ

For a correct estimation of the temperature it is therefore necessary to know an initial temperature value close to the real value. The initial value of the cell temperature T_cellₓ in a first embodiment is deduced from the knowledge of the temperature T_{cool} of the cooling fluid, which nevertheless represents the average temperature of the battery pack, in particular in the case of liquid-cooled batteries. For example, still with reference to Figure 6, knowledge of the temperature T_{cool} shown in the graph, makes it possible to converge rapidly on a cell temperature T_cell = T₂.

In a second embodiment, in the case of air-cooled batteries, where it is not possible to detect the temperature of the cooling fluid or in the case where the temperature of the cooling fluid is not strictly related to the temperature of the cells because it is influenced by other factors other than the temperature of said cells, the initial value of the cell temperature T_cellₓ is deduced from the knowledge of the external temperature of at least one cell.

Advantageously the function R_intₓ(SOCₓ, T_cellₓ) is an automatically adjusted table which evolves over time since linked with ageing of the battery pack. It is updated using a table of fixed values of R_intₓ(SOCₓ, T_cellₓ) precalibrated on the basis of ageing of the cells and an automatically adjusted correction calculated during the execution of the temperature estimation process.

Conveniently, an ageing table R_intₓ(SOCₓ, T_cellₓ, ageing) is calculated by means of an identification process carried out in a climatic chamber, by subjecting an electrochemical cell of a battery to standard charge and discharge profiles from which the evolution of the internal resistance of the cell is estimated as a function of the ageing.

Ageing of the cell is the consequence of two combined effects: the operating conditions (ageing cycles) and the storage conditions (calendar ageing) of the accumulator assembly, i.e. the environmental conditions to which the cell is subject even when it is at rest. It may be calculated heuristically by suitably weighting the overall current throughput of the battery, calculated by means of the acquisition of the current sensors measurements, the number and depth of the charge and discharge cycles, the maximum charge and discharge current ranges, the thermal cycles to which the cell is subjected and the temperature of the battery pack.

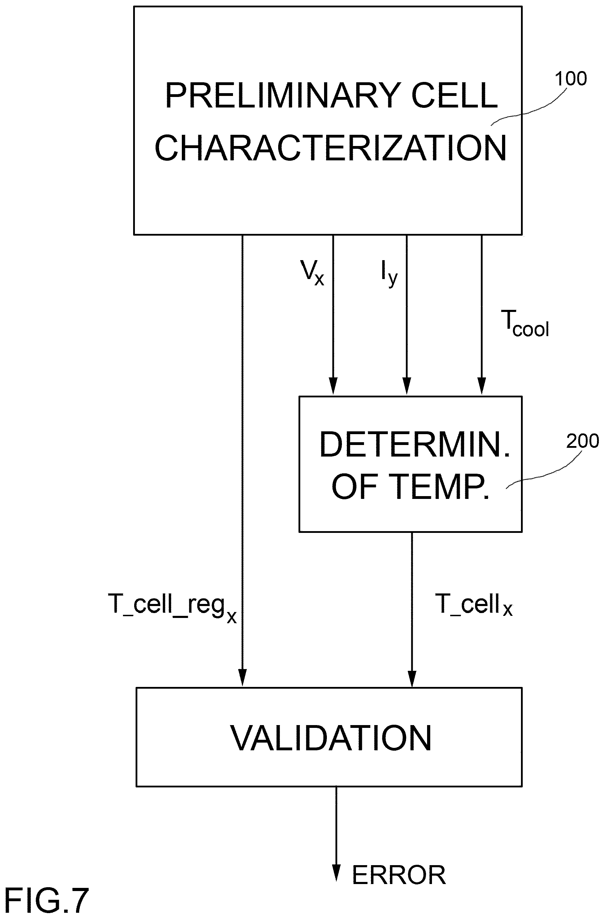

The system and the method for estimating the temperature of the cell which form the subject of the present invention have been validated by applying the procedure described in Figure 7.

The measurements over time of voltage Vₓ, current, I_{y}, and temperature of the cooling fluid T_{cool}, or external temperature of at least one cell, obtained during the step 100 of preliminary characterization of the cell model, are input to the system for determining the temperature of the cell 200. During the validation process the temperature value of the cell T_cell_regₓ recorded at the time is compared instant-by-instant with the temperature value T-cellₓ estimated by the system. The criterion adopted for validating the method according to the invention has, as index, the absolute value of the error over time, the range of which must be less than 1°C.

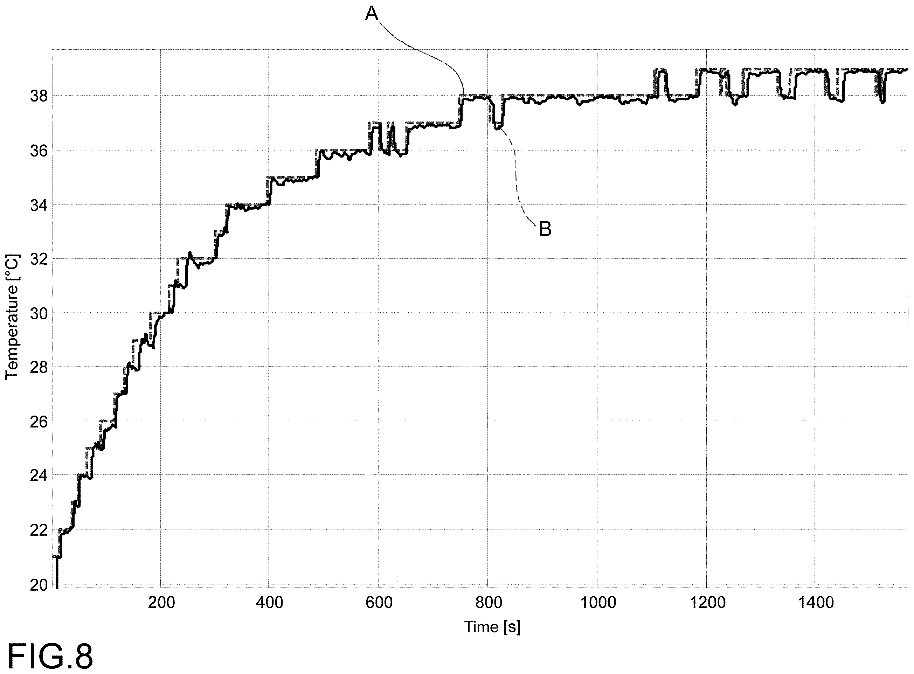

Figure 8 shows an example in which the temperature acquired in bench-tests - represented by the broken-line curve indicated by A - is compared with the temperature estimated by the system according to the invention, represented by the continuous-line curve indicated by B, for a generic cell. As can be noted, the values more or less coincide within a broad time interval, which comprises a start-up phase (i.e. about 0 - 1000 seconds), during which the temperature is substantially increasing, and an operative stabilization phase beyond 1000 seconds, during which the cell undergoes charge and discharge cycles and the temperature oscillates between two operating values.

## Claims

1. Method for determining the operating temperature of a cell of an electric charge accumulator assembly, particularly for electric or hybrid vehicles, which comprises the steps of:
- providing a reference model of a cell, representative of the evolution over time of a relationship between the internal electrical resistance of the cell and the cell temperature, depending on the state of charge;
- determining the real internal electrical resistance of a cell of an accumulator assembly;
- estimating the state of charge of said cell;
- estimating the ageing of said cell; and
- determining an estimated operating temperature of said cell from the determined value of the real internal electrical resistance of said cell and the estimated state of charge, depending on the degree of ageing of the cell, by comparison with said reference model,
**characterized in that** said comparison with the reference model includes the recursive operations of:
- estimating a value of the internal electrical resistance of said cell from a determined state of charge of the cell and from an estimate of temperature of the cell, according to said reference model;
- comparing said estimated value of the internal electrical resistance of the cell with the determined value of the real internal electrical resistance of the cell; and
- correcting the estimate of the temperature of the cell as a function of the difference between said estimated value of the internal electrical resistance of the cell and said determined real value of the internal electrical resistance of the cell,
wherein the method comprises calculating the real internal electrical resistance of the cell as a function of the variation of current through the cell in a sampling period, so that if this variation is greater than a predetermined threshold the real internal electrical resistance of the cell is calculated as the ratio between the voltage differential and the current differential during the aforementioned sampling period, and if this variation is lower than said predetermined threshold, the real internal electrical resistance of the cell is estimated to be unchanged compared to the value calculated in a previous sampling period.

2. Method according to Claim 1, comprising an initial estimate of the temperature of the cell at the value of an average temperature of the accumulator assembly.

3. Method according to Claim 2, comprising the acquisition of the temperature of the cooling fluid of the accumulator assembly, representative of the average temperature of the accumulator assembly.

4. Method according to Claim 2, comprising the acquisition of the external temperature of the cells by means of at least one physical sensor singly connected to a cell or a set of said cells, said external temperature of the cells being representative of the average temperature of the accumulator assembly.

5. Method according to any one of the preceding claims, wherein the estimate of the state of charge of the cell is carried out as a function of the real internal electrical resistance of the cell, the value of voltage across the cell and the value of current through the cell, via an Extended Kalman Filter (EKF).

6. Method according to Claim 5, wherein said extended Kalman Filter is based on a simplified circuit model, in which the only state variable is the state of charge of the cell and the output variable is the voltage across the cell, which is a function of the state of charge through the no-load voltage and the current input to the cell through said determined real internal electrical resistance.

7. Method according to any one of the preceding claims, wherein the ageing of the cell is estimated on the basis of the variation of predetermined electrical parameters of the cell.

8. Method according to Claim 7, wherein said predetermined electrical parameters of the cell include the internal resistance and capacitance of a reference model of the cell.

9. Method according to any one of Claims 1 to 5, wherein the ageing of the cell is estimated heuristically as a function of the overall current throughput through the cell, the number and depth of the cell charge and discharge cycles, the maximum charge and discharge current ranges of the cell, the thermal cycles to which the cell is subjected, and the operating temperature of the cell.

10. Method according to any one of the preceding claims, wherein said reference model of the cell is provided by a process of identification of the cell performed in a climatic chamber, subjecting the cell to predetermined charge and discharge profiles for a predetermined period of time.

11. System for determining the operating temperature of cells of an electric charge accumulator assembly, particularly for electric or hybrid vehicles, **characterized in that** it comprises:
- a system (DAS) for the acquisition of physical parameters of the cells of the accumulator assembly, designed to acquire synchronously the voltage across the cells, the current through the cells and the average temperature of the accumulator assembly;
- a module for determining the internal resistance (IRE) of the cells, adapted to calculate the real internal electrical resistance of the cells as a function of the voltage across the cells and the current through the cells;
- a module (SOCE) for estimating the state of charge of the cells, adapted to estimate a state of charge of the cells as a function of the real internal electrical resistance of the cells, the voltage across the cells and the current through the cells; and
- a temperature estimator module, designed to determine the operating temperature of the cells from the determined value of the real internal electrical resistance of said cell and the estimated state of charge, depending on the degree of ageing of the cell, by comparison with said reference model;
said system being designed to implement a method for the determination of the operating temperature of a cell of an electric charge accumulator assembly according to any one of Claims 1 to 10.

12. System according to Claim 11, comprising sensor means for sensing the temperature of a cooling fluid of the accumulator assembly, representative of the average temperature of the accumulator assembly.

13. System according to Claim 12, **characterized in that** said electrical charge accumulator assembly is devoid of physical temperature sensors singly connected to said cells or to sets of said cells.

14. System according to Claim 11, comprising sensor means for sensing the external temperature of the cells including at least one physical sensor singly connected to a cell or to a set of said cells, said external temperature of the cells being representative of the average temperature of the accumulator assembly.

## Patentansprüche

1. Verfahren zum Bestimmen der Betriebstemperatur einer Zelle einer Akkumulatoranordnung für elektrische Ladung, insbesondere für Elektro- oder Hybridfahrzeuge, das die folgenden Schritte umfasst:
- Bereitstellen eines Referenzmodells einer Zelle, das die zeitliche Entwicklung einer Beziehung zwischen dem elektrischen Innenwiderstand der Zelle und der Zellentemperatur darstellt, abhängig von dem Ladezustand;
- Bestimmen des tatsächlichen elektrischen Innenwiderstands einer Zelle einer Akkumulatoranordnung;
- Abschätzen des Ladezustands der Zelle;
- Abschätzen der Alterung der Zelle; und
- Bestimmen einer geschätzten Betriebstemperatur der Zelle aus dem bestimmten Wert des tatsächlichen elektrischen Innenwiderstands der Zelle und dem geschätzten Ladezustand abhängig von dem Alterungsgrad der Zelle im Vergleich zu dem Referenzmodell,
**dadurch gekennzeichnet, dass**:
der Vergleich mit dem Referenzmodell die rekursiven Operationen von Folgenden enthält:
- Abschätzen eines Werts des elektrischen Innenwiderstands der Zelle aus einem bestimmten Ladezustand der Zelle und aus einer Schätzung der Temperatur der Zelle gemäß dem Referenzmodell;
- Vergleichen des geschätzten Werts des elektrischen Innenwiderstands der Zelle mit dem bestimmten Wert des tatsächlichen elektrischen Innenwiderstands der Zelle; und
- Korrigieren der Schätzung der Temperatur der Zelle abhängig von der Differenz zwischen dem geschätzten Wert des elektrischen Innenwiderstands der Zelle und dem bestimmten tatsächlichen Wert des elektrischen Innenwiderstands der Zelle,
wobei das Verfahren das Berechnen des tatsächlichen elektrischen Innenwiderstands der Zelle abhängig von der Variation von Strom durch die Zelle in einem Abtastzeitraum umfasst, sodass, falls diese Variation über einem vorgegebenen Schwellenwert liegt, der tatsächliche elektrische Innenwiderstand der Zelle als das Verhältnis zwischen dem Spannungsdifferential und dem Stromdifferential während des vorgenannten Abtastzeitraums berechnet wird, und, falls diese Variation unter dem vorgegebenen Schwellenwert liegt, der tatsächliche elektrische Innenwiderstand der Zelle verglichen mit dem Wert, der in einem vorangegangenen Abtastzeitraum berechnet wurde, als unverändert abgeschätzt wird.

2. Verfahren nach Anspruch 1, das eine anfängliche Schätzung der Temperatur der Zelle an dem Wert einer Durchschnittstemperatur der Akkumulatoranordnung umfasst.

3. Verfahren nach Anspruch 2, das das Erfassen der Temperatur des Kühlmittels der Akkumulatoranordnung, die für die Durchschnittstemperatur der Akkumulatoranordnung kennzeichnend ist, umfasst.

4. Verfahren nach Anspruch 2, das das Erfassen der Außentemperatur der Zellen durch wenigstens einen physikalischen Sensor, der einzeln an eine Zelle oder einen Satz der Zellen angeschlossen ist, umfasst, wobei die Außentemperatur der Zellen für die Durchschnittstemperatur der Akkumulatoranordnung kennzeichnend ist.

5. Verfahren nach einem der vorhergehenden Ansprüche, wobei die Schätzung des Ladezustands der Zelle abhängig von dem tatsächlichen elektrischen Innenwiderstand der Zelle, dem Wert der Spannung durch die Zelle und dem Wert des Stroms durch die Zelle über einen erweiterten Kalman-Filter (EKF) durchgeführt wird.

6. Verfahren nach Anspruch 5, wobei der erweiterte Kalman-Filter auf einem vereinfachten Schaltkreismodell basiert, in dem die einzige Zustandsvariable der Ladezustand der Zelle ist und die Ausgangsvariable die Spannung durch die Zelle ist, die durch die Leerlaufspannung und den Stromeingang in die Zelle durch den bestimmten tatsächlichen elektrischen Innenwiderstand von dem Ladezustand abhängig ist.

7. Verfahren nach einem der vorhergehenden Ansprüche, wobei die Alterung der Zelle auf der Grundlage der Variation von vorgegebenen elektrischen Parametern der Zelle abgeschätzt wird.

8. Verfahren nach Anspruch 7, wobei die vorgegebenen elektrischen Parameter der Zelle den Innenwiderstand und die Kapazität eines Referenzmodells der Zelle enthalten.

9. Verfahren nach einem der Ansprüche 1 bis 5, wobei die Alterung der Zelle heuristisch abhängig von dem gesamten Stromdurchsatz durch die Zelle, der Anzahl und der Tiefe der Zellenlade- und -entladezyklen, den Maximallade- und -entladestrombereichen der Zelle, den thermischen Kreisläufen, denen die Zelle ausgesetzt ist, und der Betriebstemperatur der Zelle abgeschätzt wird.

10. Verfahren nach einem der vorhergehenden Ansprüche, wobei das Referenzmodell der Zelle durch einen Vorgang des Identifizierens der Zelle bereitgestellt wird, der in einer Klimakammer durchgeführt wird, wobei die Zelle eine vorgegebene Zeitdauer lang vorgegebenen Lade- und Entladeprofilen ausgesetzt wird.

11. System zum Bestimmen der Betriebstemperatur von Zellen einer Akkumulatoranordnung für elektrische Ladung, insbesondere für Elektro- oder Hybridfahrzeuge, **dadurch gekennzeichnet, dass** es Folgendes umfasst:
- ein System (DAS) zum Erfassen von physikalischen Parametern der Zellen der Akkumulatoranordnung, dazu ausgelegt, die Spannung durch die Zellen, den Strom durch die Zellen und die Durchschnittstemperatur der Akkumulatoranordnung synchron zu erfassen;
- ein Modul zum Bestimmen des Innenwiderstands (*internal resistance* - IRE) der Zellen, angepasst, den tatsächlichen elektrischen Innenwiderstand der Zellen abhängig von der Spannung durch die Zellen und dem Strom durch die Zellen zu berechnen;
- ein Modul (SOCE) zum Abschätzen des Ladezustands der Zellen, angepasst, einen Ladezustand der Zellen abhängig von dem tatsächlichen elektrischen Innenwiderstand der Zellen, der Spannung durch die Zellen und dem Strom durch die Zellen abzuschätzen; und
- ein Temperaturschätzmodul, das dazu ausgelegt ist, die Betriebstemperatur der Zellen aus dem bestimmten Wert des tatsächlichen elektrischen Innenwiderstands der Zelle und dem geschätzten Ladezustand abhängig von dem Alterungsgrad der Zelle im Vergleich zum dem Referenzmodell zu bestimmen;
wobei das System dazu ausgelegt ist, ein Verfahren zum Bestimmen der Betriebstemperatur einer Zelle einer Akkumulatoranordnung für elektrische Ladung gemäß einem der Ansprüche 1 bis 10 zu implementieren.

12. System nach Anspruch 11, das Sensormittel zum Erfassen der Temperatur eines Kühlmittels der Akkumulatoranordnung, die für die Durchschnittstemperatur der Akkumulatoranordnung kennzeichnend ist, umfasst.

13. System nach Anspruch 12, **dadurch gekennzeichnet, dass** die Akkumulatoranordnung für elektrische Ladung frei von physikalischen Temperatursensoren ist, die einzeln an die Zellen oder an Sätze der Zellen angeschlossen sind.

14. System nach Anspruch 11, Sensormittel zum Erfassen der Außentemperatur der Zellen umfassend, einschließlich wenigstens eines physikalischen Sensors, der einzeln an eine Zelle oder einen Satz der Zellen angeschlossen ist, wobei die Außentemperatur der Zellen für die Durchschnittstemperatur der Akkumulatoranordnung kennzeichnend ist.

## Revendications

1. Procédé pour déterminer la température de fonctionnement d'une cellule d'un ensemble accumulateur de charge électrique, en particulier pour des véhicules électriques ou hybrides, qui comprend les étapes consistant à :
- fournir un modèle de référence d'une cellule, représentatif de l'évolution sur la durée d'une relation entre la résistance électrique interne de la cellule et la température de cellule, en fonction de l'état de charge ;
- déterminer la résistance électrique interne réelle d'une cellule d'un ensemble accumulateur ;
- estimer l'état de charge de ladite cellule ;
- estimer le vieillissement de ladite cellule ; et
- déterminer d'une température de fonctionnement estimée de ladite cellule à partir de la valeur déterminée de la résistance électrique interne réelle de ladite cellule et de l'état de charge estimé, en fonction du degré de vieillissement de la cellule, par comparaison avec ledit modèle de référence,
**caractérisé en ce que** ladite comparaison avec le modèle de référence comporte les opérations récursives consistant à :
- estimer une valeur de la résistance électrique interne de ladite cellule à partir d'un état de charge déterminé de la cellule et à partir d'une estimation de température de la cellule, selon ledit modèle de référence ;
- comparer ladite valeur estimée de la résistance électrique interne de la cellule avec la valeur déterminée de la résistance électrique interne réelle de la cellule ; et
- corriger l'estimation de la température de la cellule en fonction de la différence entre ladite valeur estimée de la résistance électrique interne de la cellule et ladite valeur réelle déterminée de la résistance électrique interne de la cellule,
dans lequel le procédé comprend de calculer de la résistance électrique interne réelle de la cellule en fonction de la variation de courant à travers la cellule dans une période d'échantillonnage, de sorte que si cette variation est supérieure à un seuil prédéterminé la résistance électrique interne réelle de la cellule est calculée comme étant le rapport entre le différentiel de tension et le différentiel de courant pendant la période d'échantillonnage susmentionnée, et si cette variation est inférieure audit seuil prédéterminé, la résistance électrique interne réelle de la cellule est estimée comme étant inchangée comparativement à la valeur calculée dans une période d'échantillonnage antérieure.

2. Procédé selon la revendication 1, comprenant une estimation initiale de la température de la cellule à la valeur d'une température moyenne de l'ensemble accumulateur.

3. Procédé selon la revendication 2, comprenant l'acquisition de la température du fluide de refroidissement de l'ensemble accumulateur, représentative de la température moyenne de l'ensemble accumulateur.

4. Procédé selon la revendication 2, comprenant l'acquisition de la température externe des cellules au moyen d'au moins un capteur physique connecté individuellement à une cellule ou un ensemble desdites cellules, ladite température externe des cellules étant représentative de la température moyenne de l'ensemble accumulateur.

5. Procédé selon l'une quelconque des revendications précédentes, dans lequel l'estimation de l'état de charge de la cellule est réalisée en fonction de la résistance électrique interne réelle de la cellule, la valeur de tension à travers la cellule et la valeur de courant à travers la cellule, via un filtre de Kalman étendu (EKF).

6. Procédé selon la revendication 5, dans lequel ledit filtre de Kalman étendu est basé sur un modèle de circuit simplifié, dans lequel le seul état variable est l'état de charge de la cellule et la variable de sortie est la tension à travers la cellule, qui est en fonction de l'état de charge à travers la tension en l'absence de charge et l'entrée de courant dans la cellule à travers ladite résistance électrique interne réelle déterminée.

7. Procédé selon l'une quelconque des revendications précédentes, dans lequel ledit vieillissement de la cellule est estimé sur la base de la variation de paramètres électriques prédéterminés de la cellule.

8. Procédé selon la revendication 7, dans lequel lesdits paramètres électriques prédéterminés de la cellule comportent la résistance interne et la capacité d'un modèle de référence de la cellule.

9. Procédé selon l'une quelconque des revendications 1 à 5, dans lequel le vieillissement de la cellule est estimé de manière heuristique en fonction du débit de courant global à travers la cellule, du nombre et de la profondeur des cycles de charge et de décharge de cellule, des plages maximales de courant de charge et de décharge de la cellule, des cycles thermiques auxquels la cellule est soumise, et de la température de fonctionnement de la cellule.

10. Procédé selon l'une quelconque des revendications précédentes, dans lequel ledit modèle de référence de la cellule est fourni par un processus d'identification de la cellule réalisé dans une chambre climatisée, soumettant la cellule à des profils de charge et de décharge prédéterminés pendant une période de temps prédéterminée.

11. Système pour déterminer la température de fonctionnement de cellules d'un ensemble accumulateur de charge électrique, en particulier pour des véhicules électriques ou hybrides, **caractérisé en ce qu'**il comprend :
- un système (DAS) pour l'acquisition de paramètres physiques des cellules de l'ensemble accumulateur, conçu pour acquérir de manière synchrone la tension à travers les cellules, le courant à travers les cellules et la température moyenne de l'ensemble accumulateur ;
- un module pour déterminer la résistance interne (IRE) des cellules, adapté pour calculer la résistance électrique interne réelle des cellules en fonction de la tension à travers les cellules et du courant à travers les cellules ;
- un module (SOCE) pour estimer l'état de charge des cellules, adapté pour estimer l'état de charge des cellules en fonction de la résistance électrique interne réelle des cellules, de la tension à travers les cellules et du courant à travers les cellules ; et
- un module estimateur de température, conçu pour déterminer la température de fonctionnement des cellules à partir de la valeur déterminée de la résistance électrique interne réelle de ladite cellule et de l'état de charge estimé, en fonction du degré de vieillissement de la cellule, par comparaison avec ledit modèle de référence ;
ledit système étant conçu pour mettre en oeuvre un procédé pour la détermination de la température de fonctionnement d'une cellule d'un ensemble accumulateur de charge électrique selon l'une quelconque des revendications 1 à 10.

12. Système selon la revendication 11, comprenant des moyens de détection pour détecter la température d'un fluide de refroidissement de l'ensemble accumulateur, représentative de la température moyenne de l'ensemble accumulateur.

13. Système selon la revendication 12, **caractérisé en ce que** ledit ensemble accumulateur de charge électrique est dépourvu de détecteurs de température physiques connectés individuellement auxdites cellules ou à des ensembles desdites cellules.

14. Système selon la revendication 11, comprenant des moyens de détection pour détecter la température externe des cellules comprenant au moins un détecteur physique connecté individuellement à une cellule ou à un ensemble desdites cellules, ladite température externe des cellules étant représentative de la température moyenne de l'ensemble accumulateur.
